Europäisches Patentamt

European Patent Office

Office européen des brevets

(11) Publication number: **0 213 509**
**A2**

(12) **EUROPEAN PATENT APPLICATION**

(21) Application number: 86111296.9

(22) Date of filing: 14.08.86

(51) Int. Cl.⁴: **C02F 1/52**

(30) Priority: 19.08.85 US 767351

(43) Date of publication of application:
11.03.87 Bulletin 87/11

(84) Designated Contracting States:
AT BE CH DE FR GB IT LI NL SE

(71) Applicant: **PETERSON FILTERS CORPORATION**
**1949 South 300 West**
**South Lake City Utah(US)**

(72) Inventor: **Peterson, C. Lynn**
**2578 South Elizabeth Street**
**Salt Lake City Utah(US)**

(74) Representative: **Baillie, Iain Cameron et al**
**c/o Ladas & Parry Isartorplatz 5**
**D-8000 München 2(DE)**

(54) Method and apparatus for use in separating solids from liquids.

(57) A system for subjecting a slurry containing solids and a liquid and a flocculating agent to intense agitation so as to form the solids into relatively small and bead-like floccules which may be readily separated from the liquid in which they are contained.

FIG. 1.

EP 0 213 509 A2

## METHOD AND APPARATUS FOR USE IN SEPARATING SOLIDS FROM LIQUIDS

### Field of the Invention

This invention is directed to method and apparatus for separating solids from liquids including the use of flocculating agents, such as polymers, and more particularly for separating fine solids having particle sizes of about 28 mesh by zero from liquids such as the refuse in a coal preparation plant.

### Background of the Invention

Various methods and apparatus for separating fine particle size solids from liquids are in use today. One such method and apparatus is disclosed in U. S. Patent No. 3,523,889 to F. G. Eis. In this patent a flocculating agent is introduced into a slurry which is then discharged from a standpipe and its flow is arrested by a baffle and deflected outwardly for mixing with the liquid in the tank. In Eis, the slurry with the flocculating agent included therein is introduced into the tank in the midst of gentle agitation. Another method is disclosed in U. S. Patent No. 4,055,494 to R. C. Emmett, Jr., and assigned to Envirotech Corporation. In the Emmett patent, the slurry to be separated is fed successively through four mixing stages and a portion of the flocculating agent is introduced and mixed in each stage using a rotating blade. The Emmett patent does not state the type of agitation in the mixing stages. However, testimony in a trial Amstar Corporation vs. Envirotech Corporation and Energy Fuels Nuclear, Inc., in the United States District Court For The District of Utah Central Division in a decision published May 3, 1983, shows that Envirotech sought to test a means of mechanically stirring flocculant and slurry with sufficient force to produce excellent floc formation but not so forceful as to destroy flocs once formed. J. Rosenbaum & J. Clemmer, "Liquid-Solids Separations," in J. Clegg & D. Foley, Uranium Ore Processing 172, 1980 (1958), ("the flocculant must be disseminated uniformly throughout the slurry without degrading the floccules. Intense agitation to distribute the reagent for maximum effectiveness degrades the fragile floccules, and thus defeats its own purpose.")

### Summary of the Invention

This invention relates to method and apparatus for separating solids in fine particle sizes from a liquid using a flocculating agent, such as an activated polymer mixture, in the presence of intense agitation. In accordance with this invention, the floccules are not fragile but are very strong. In one embodiment of the invention, this is accomplished in a cone-shaped clarifier/thickener as a part of a conventional coal preparation plant process.

In one embodiment of the invention, a vessel having a top, a cone-shaped bottom and a side wall is provided. A level of ingredients is maintained in the vessel by extracting from the vessel clear overflow and flocculated slurry at a rate substantially the same as the rate of slurry introduction and flocculating agent in solution introduction to maintain the level substantially constant. Thus, there exists at all times a volume of different per cent solids in the slurries in the vessel. An impeller is submerged in the volume of slurries and is spaced from the bottom of the vessel. The impeller is rotated at speeds sufficient to create a zone of intense agitation in the vessel. A first plurality of spaced apart tubes having open ends are located in the vessel with their open ends adjacent to and above the plane of rotation of the impeller. A second plurality of spaced apart tubes having nozzles at one end thereof are located adjacent to the first plurality of tubes with the nozzles adjacent to and above the plane of rotation of the impeller. The slurry containing the solids to be separated from the liquid is introduced into the vessel through the first plurality of spaced apart tubes and the flocculating agent solution, such as an activated polymer in dilute mixture, is introduced into the vessel through the plurality of nozzles. As portions of the slurry and flocculating agent enter into the zone of intense agitation, the solids therein are acted on by the said dilute mixture and formed into relatively small and bead-like floccules. The bead-like floccules settle down onto the cone-shaped bottom, move into a drain well and are extracted from the vessel and fed to a separation unit. A clear overflow is extracted from the vessel through an annular opening at the top of the side wall of the vessel.

It is an object of this invention to separate fine sized solids from a liquid in a slurry by using a flocculating agent wherein the slurry and the flocculating agent are subjected to intense agitation to form relatively small and bead-like floccules.

Additional objects, advantages, and novel features of the invention are set forth in part in the description which follows which will be understood by those skilled in the art upon examination of the following or may be learned by practice of the invention. The objects and advantages of the invention may be realized and obtained by means of the instrumentalities and combinations particularly pointed out in the appended claims.

Brief Description of the Invention

Fig. 1 is a schematic illustration of a flow diagram of a coal processing plant incorporating the invention;

Fig. 2 is a schematic side elevational view of an embodiment of the invention;

Fig. 3 is a top plan view of a portion of Fig. 2; and

Fig. 4 is a bottom plan view of a portion of Fig. 3.

Detailed Description of the Invention

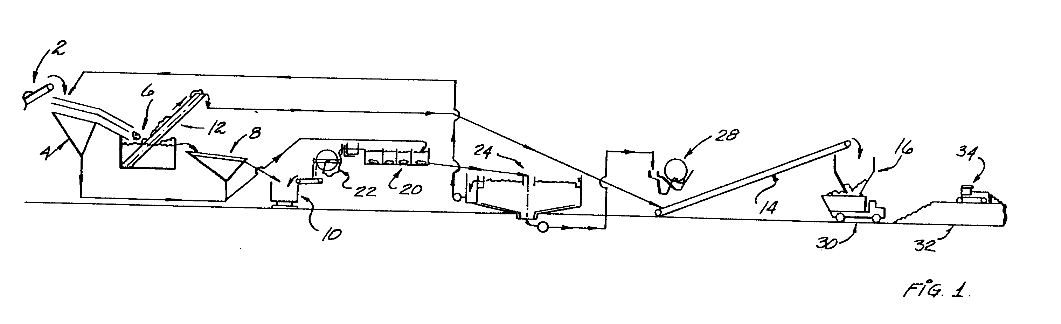

In Fig. 1, there is schematically illustrated a flow diagram of a coal processing plant comprising a conveyor 2 carrying run of the mine material and dumping the material onto desliming screens 4 wherein the material is separated into a greater than 28 mesh size and a 28 mesh by zero size. The greater than 28 mesh material is fed into the jig 6 wherein water is used to separate the low ash coal from refuse, such as rock, slate and high ash disposable material. The separation is by specific gravity with the coal floating across the surface of the jig 6 and the refuse sinking to the bottom. The low ash coal is separated and fed into dewatering screens 8 and then into a rail car 10. The refuse it taken out of the jig 6 by conveyor 12 and transported to conveyor 14 and dumped into refuse truck bin 16.

The 28 mesh by zero size run of the mine material is fed into float cells 20 wherein the 28 mesh by zero size low ash coal is separated out and fed into a filter unit 22. Water and fine size material is drained from the dewatering screen 8 and is also fed into the float cells 20. The dewatered 28 mesh by zero low ash coal is transferred from the filter unit to the rail car 10. The 28 mesh by zero refuse sinks to the bottom of the float cells 20 and is transferred in slurry form to a thickener/clarifier 24. The thickened 28 mesh by zero refuse is fed into the refuse filter 28. The filter cake of 28 mesh by zero refuse formed in the refuse filter 28 is deposited onto the greater than size 28 mesh refuse on the conveyor belt 14 to be dumped into refuse truck bin 16. The refuse is dumped from refuse truck bin 16 into trucks 30 and transported to gob pile 32 wherein cats 34 push and level out the refuse in the gob pile. The height in the gob pile is initially 12 inches and is then compacted to 4:1 to seal the gob pile from air to prevent spontaneous gob pile fires.

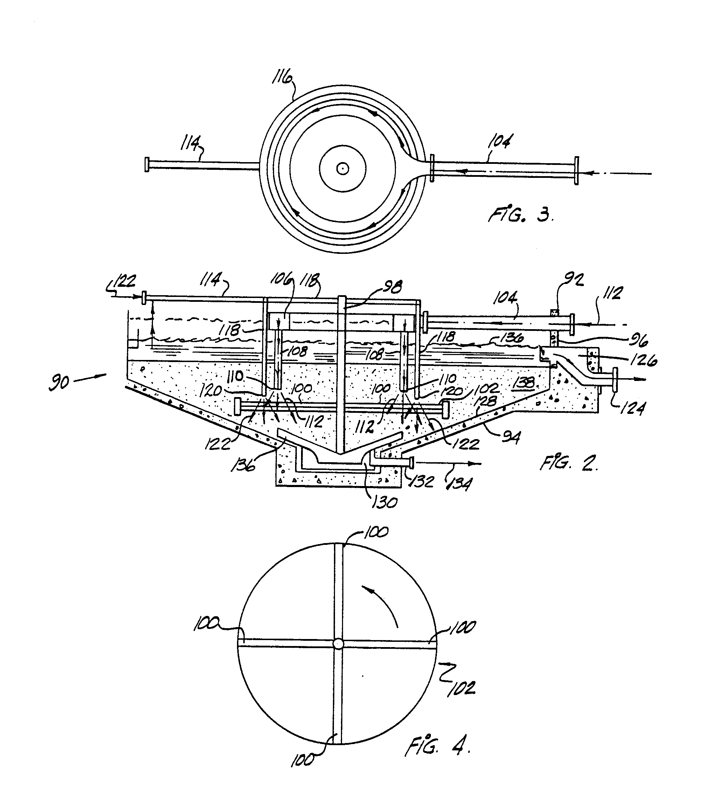

One embodiment of the invention is illustrated in Figs. 2 - 4 and comprises a vessel 90 having an open top 92, a cone-shaped bottom 94 and a side wall 96 which in the preferred embodiment is cylindrical. A rotatable shaft 98 having the blades 100 secured thereto, forms an impeller. The shaft 98 is supported and rotated by conventional means (not shown). As illustrated in Fig. 4, the impeller preferably has four blades 100 spaced 90 degrees apart, but it is within the scope of this invention to use impellers 102 having different numbers of blades. The blades 100 are inclined relative to the vertical so as to exert a downward and annular force on the portions of the slurries in the vessel 90 that the blades 100 contact. However, in some instances the blades are parallel to the vertical.

An inlet pipe 104 passes through the side wall 96 adjacent to the top 92 and terminates in an annular header 106. A plurality of tubes 108 extend downwardly from the header 106 and terminate with open ends 110 which are adjacent to and above the impeller 102. There are four tubes 108 spaced 90 degrees apart but it is within the scope of this invention to use as many tubes 108 as desired. A slurry 112 comprising the solids to be separated from the liquid is introduced into the vessel 90 through the inlet pipe 104, the header 106 and the tubes 108. An inlet pipe 114 is located above the open top 92 and terminates in an annular header 116. A plurality of tubes 118 extend downwardly from the header 116 and are provided with nozzles 120 adjacent to and above the impeller 102. There are four tubes 118 spaced 90 degrees apart but it is within the scope of this invention to use as many tubes 118 as desired. The number of tubes 118 should correspond to the number of tubes 108. A flocculating agent 122, such as an activated dilute polymer mixture is introduced into the vessel 90 through the inlet pipe 114, the header 116 and the tubes 118. An outlet pipe 124 is located in an overflow weir 126 in the side wall 94 and is used to extract a clear overflow from the vessel 90.

The cone-shaped bottom 94 has a surface 128 inclined at an angle sufficiently great to encourage movement of the bead-like floccules downwardly into a drain well 130. An outlet pipe 132 is used to extract a slurry 134 comprising the bead-like floccules in a liquid from the vessel 90 through the drain well 128 to suitable separating means, such as the refuse filter 28. A rake 136 is used in a conventional manner to assist in the movement of the thickened slurry and bead-like floccules into the drain well 130.

The rate of introduction of slurry 112 and flocculating agent 122 relative to the rate of extraction of the clear overflow and slurry 134 functions to maintain a level 136 of material in the vessel 90. Because of the differences in the characteristics of the slurries 112, 122, 124 and 134, the volume 138 in the vessel 90 comprises slurries of many different per cent solids.

In operation, the impeller 102 is rotated at a rate sufficient to produce a tip speed of the blades 100 of between about 300 and 600 feet per minute and preferably about 500 feet per minute. This movement of the blades 100 through the slurry 138 produces a zone of intense agitation. The slurry 112 comprising the solids to be separated from the liquid flows out of the tubes 108 and the flocculating agent 122 is sprayed out of the tubes 118 and immediately enters into the zone of intense agitation generated by the rotating blades 100. This intense agitation causes many collisions between the flocced solids so that the floccules finally formed are relatively small and appear to be generally bead-like in shape. When the slurry containing these relatively small and bead-like floccules is passed through a conventional filter, such as the refuse filter 28, the filter cakes formed thereby have densities much greater than the density of filter cakes formed from normally produced slurries. Baffles (not shown) are provided so as to prevent any tendency for the slurries in the vessel to swirl in response to the rotation of the blades.

The size of a unit illustrated in Figs. 2-4 depends on the amount of material to be processed. In the embodiment of the invention illustrated in Figs. 2-4, the vessel 90 has an inside diameter at the side wall 94 of about 40 feet. The impeller 102 has a tip diameter of about 20 feet. The impeller 102 is rotated at a rate sufficient to produce tip speeds of the blades 100 between about 300 and 600 feet per minute and preferably about 500 feet per minute. Slurry 112 is introduced into the vessel 90 through the open end 110 of each tube 108 at a rate of between about 400 and 600 gallons per minute and preferably about 530 gallons per minute and at a solids concentration of between about 3 and 8 per cent by weight and preferably about 4 per cent by weight. The slurry 134 comprising the floccules in a liquid has a concentration of between about 35 and 50 per cent solids by weight, and preferably about 40 per cent solids by weight. The flocculating agent, comprising an activated polymer mixture at a concentration less than about 0.5 per cent by weight and preferably about 0.03 per cent by weight is introduced through the nozzle 120 of each tube 118. The activated polymer may be cationic, moderately anionic or anionic or a mixture thereof. The rotation of the impeller 102 and the velocity of the slurry and the flocculating agent produce a zone of intense agitation to form the solids in the slurry into relatively small and bead-like floccules which sink to the surface 128. The rate of overflow is between 1 CPM/square foot of overflow area and 4.0 CPM/square foot of overflow area and preferably about 2.0 CPM/square foot of overflow area.

It is contemplated that the inventive concepts herein described may be variously otherwise embodied and it is intended that the appended claims be construed to include alternative embodiments of the invention except insofar as limited by the prior art.

## Claims

1. A method for use in separating solids from a liquid characterized by the steps of providing a vessel having a bottom and a side wall; forming a volume of solids and liquids in said vessel; maintaining said volume of solids and liquids in said vessel substantially constant by controlling the input and output of solids and liquids; continuously moving a rotary impeller having a plurality of blades through said volume of solids and liquids to form a zone of intense agitation by rotating said impeller at rates sufficient to move each of said blades at a tip speed of between about 300 and 600 feet per minute; continuously introducing a first slurry comprising solids in a liquid into said zone of intense agitation; continuously introducing a flocculating agent into said zone of intense agitation so that said flocculating agent acts on said first slurry to form said solids therein into floccules; continuously removing clear liquid through an overflow means located adjacent to a top of said side wall; continuously allowing said floccules to settle to said bottom; continuously withdrawing a second slurry comprising said floccules and a liquid from said bottom of said vessel; and continuously separating said floccules from said liquid.

2. A method according to claim 1, characterized by introducing said first slurry and said flocculating agent substantially simultaneously.

3. A method according to claim 2, further characterized by introducing said first slurry and said flocculating agent at adjacent locations, said first slurry being introduced at a plurality of spaced apart locations, and said flocculating agent being introduced at a plurality of spaced apart locations.

4. A method according to claim 3, characterized in that said floccules are relatively small and bead-like in shape and said flocculating agent has a concentration of less than 0.5 percent by weight, and in that said impeller is rotated at rates sufficient to move each of said blades at a tip speed of about 500 feet per minute.

5. A method according to claim 4, characterized in that said solids in said first slurry comprises 28 mesh by zero refuse from a coal processing plant.

6. Apparatus for use in separating solids from a liquid characterized by a vessel having a bottom and a side wall; a volume of solids and liquids in said vessel; means for maintaining the volume of solids and liquids by controlling the input and outout of solids and liquids; a rotatable impeller having a plurality of blades submerged in said volume of solids and liquids; means for continuously rotating said impeller at rates sufficient to move each of said blades at a tip speed of between about 300 and 600 feet per minute to form a zone of intense agitation in said volume of solids and liquid means for continuously introducing a first slurry comprising solids in a liquid into said zone of intense agitation; means for continuously introducing a flocculating agent into said zone of intense agitation so that said flocculating agent acts on said first slurry to form said solids therein into floccules which settle to said bottom; means for continuously withdrawing a clear liquid through an overflow means located adjacent to a top of said side wall; means for removing said floccules from said bottom in a second slurry comprising said floccules in a liquid; and means for separating said floccules from said liquid.

7. Apparatus according to claim 6, characterized in that said first slurry and said flocculating agent are introduced substantially simultaneously.

8. Apparatus according to claim 6, characterized in that said means for introducing said flocculating agent is located adjacent to said means for introducing said first slurry.

9. Apparatus according to claim 8, characterized in that said means for introducing said first slurry comprises a plurality of spaced apart open ended tubes, in that said means for introducing said flocculating agent comprises a plurality of spaced apart nozzles, and in that said floccules are relatively small and bead-like in shape.

10. Apparatus according to claim 9, characterized in that said flocculating agent has a concentration of less than about 0.5 percent by weight, said impeller is rotated at rates sufficient to move each of said blades at a tip speed of about 500 feet per minute and in that said solids in said first slurry comprise 28 mesh by zero refuse from a coal processing plant.

FIG. 1.

0 213 509

FIG. 3.

FIG. 2.

FIG. 4.